# EUROPEAN PATENT APPLICATION

(11) **EP 2 166 704 A1**
(43) Date of publication of application: **24.03.2010**
(21) Application number: 08105401.7
(22) Date of filing: 22.09.2008
(51) Int. Cl.: H04L 12/26

(54) **The energy profile generator - a device for constructing and storing energy profiles**

(71) Applicant: Nokia Siemens Networks OY, 02610 Espoo (FI)
(72) Inventor: Restrepo Cardona, Juan Camilo, 80336 München (DE); Gruber, Claus, 80336 München (DE); Rambach, Franz, 81927 München (DE)
(74) Representative: Bruglachner, Thomas E.

(57) **Abstract**

The communication interface receives operational network device energy consumption information and operational network device load bandwidth information. The calculating device derives an energy profile information using the operational network device energy consumption information and the operational network device load bandwidth information. The storage device stores the energy profile information.

## Description

This application relates to a network device and to a method of operating the network device.

In general, energy or electrical power consumed by telecommunications networks is growing. This is due in part of increasing demand of traffic and in part of upgrading of current networks. Therefore, operational costs related to the energy are also becoming more important for network operators and for network equipment manufacturers. A large number of mechanisms presently exist to reduce the energy consumption. Nevertheless, the desire for innovative solutions for energy conservation remains.

It is believed that a dependency between an electrical power consumption of network devices and its load bandwidth can be used to manage its consumed electrical power.

The application provides a network apparatus. The network apparatus is also called an energy profile generator. The network apparatus comprises a communication interface.

The communication interface provides a communication device that is intended to exchange data with one or more network devices. The communication device can comprise an Ethernet port. The network device comprises one or more network nodes. The network node functions like a router that provides connectivity between communicating entities. The network node can include different devices like CPU (central processing unit), RAM (random access memory), a fan, or air-conditioning unit.

Several network devices can be connected together and form part of a communication network. One or more network devices can be located on one network site.

The communication interface receives operational energy consumption information of the network device. The energy consumption information of the network device refers to electrical power used by the network device. The term operational refers to a state of the network device, wherein the network device is turned on. Although the communication interface receives operational energy consumption information of the network device, it can receive other energy consumption information of the network device, such maximum energy consumption information of the network device.

The communication interface also receives operational load bandwidth information of the network device. The load bandwidth information of the network device refers to an amount of information that the network device is handling.

The network apparatus also comprises a calculating device. Although the calculating device is usually in form a processor or a computing device, it can be in the form of a human being performing the required calculation. The calculating device derives energy profile (EP) information of the network device using the operational energy consumption information of the network device and the operational load bandwidth information of the network device.

A dependency usually exists between the operational energy consumption information of the network device and the operational load bandwidth information of the network device. The dependency relates to a relationship. For example, the operational energy consumption of the network device mostly increases as the operational load bandwidth information increases.

The energy profile information can represented by a mathematical function or a graph. The derived energy profile information can be extended using extrapolation or interpolation technique to provide additional information.

The calculating device can also uses additional information, such as environmental temperature information or weather forecast information, to derive the energy profile information. The use of the additional information comprehends additional factors that influence significantly the energy consumption of the network device.

The network apparatus also comprises a storage device for storing the derived energy profile information. The storage device can comprise a computer memory device, such a random access memory. The derived energy profiles can be stored individually or the multiple derived energy profiles can be combined into a composite energy profile for simplification.

The storage device can also store the energy consumption information of the network device and/or the load bandwidth information of the network device. Other devices, such as Network Management System, can later obtain the stored energy profile information and use it to reduce energy consumption of the network device.

Different types of measurement device can also be provided for the network apparatus.

The network apparatus can comprise an energy consumption measurement device for measuring the operational energy consumption of the network device. The energy consumption measurement device measures the electrical consumption of the network device. It can just measure its electrical current when its electrical voltage is essentially constant. The energy consumption measurement device can send the measured energy consumption information to the network apparatus or the network apparatus can obtain the measured energy consumption information from the energy consumption measurement device.

A load bandwidth measurement device can be included in the network apparatus for measuring the operational load bandwidth information of the network device. The load bandwidth measurement device measures amount of data information that the network device is handling. Later, the load bandwidth measurement device can transmit the measured operational load bandwidth information to the network apparatus or the network apparatus can obtain the measured operational load bandwidth information from the load bandwidth measurement device.

The storage device can comprise a management information database (MIB) of the network device. The MIB is used to store the energy profile information of the network device. The network device MIB can also store the operational energy consumption information of the network device and/or the operational load bandwidth information of the network device. Simple Network Management Protocol (SNMP) can be used to manage the MIB of the network device.

The application provides a further network apparatus. The further network apparatus does not a communication interface for receiving operational network device energy consumption information and/or operational network bandwidth information as the further network apparatus itself determines the said information.

The further network apparatus comprises an energy consumption measurement device, a load bandwidth measurement device, a calculating device, and a storage device.

As described above, the energy consumption measurement device measures the operational energy consumption of a network device whilst the load bandwidth measurement device measures the operational network device load bandwidth information of the network device. The calculating device derives an energy profile information using the operational network device energy consumption information and the operational network device load bandwidth information. The storage device stores the derived energy profile information.

In one aspect of the application, the network apparatus is adapted to support one network device and/or a plurality of network devices. The network apparatus can support the plurality of network devices in a time-share manner.

The application also provides a wireless or a wired communication network that comprises one or more network apparatuses. The communication network provides communication services to its users. This permits the communication network with wide spread implementation of the network apparatus.

The application also provides a measurement device that comprises the network apparatus. The measurement device can determine the operational energy consumption information of the network device and/or the operational load bandwidth information of the network device. This allows an integration of the network apparatus with the measurement device.

The application also provides a method for determining a characteristic status of a communication network. The characteristic status comprises energy profile information of a network device.

The method comprises the step of determining operational energy profile information of a network device of the communication network by the network apparatus. The operational energy profile information can be determined by measuring the operational energy consumption information of the network device using an internal energy consumption measurement device or by obtaining the operational energy profile information from an external energy consumption measurement device.

Similarly, the method also comprises the step of determining operational load bandwidth information of the network device by the network apparatus. The operational load bandwidth information can be determined by measuring an operational load bandwidth of the network device using an internal load bandwidth measurement device or by obtaining the operational load bandwidth information from external load bandwidth measure device.

A calculating device of the network apparatus then determines network device energy profile information using the determined operational network device energy consumption information and the determined operational network device load bandwidth information. The calculating device can use an array or a mathematical function to represent the energy profile information. The array or the mathematical function shows a relationship between the determined operational network device energy consumption information and the determined operational network device load bandwidth information.

The determined operational network device energy profile information can be later stored in a storage device of the network apparatus. The stored network device energy profile information is intended for use later by the network apparatus or by another device to manage energy consumption of the network device.

The method can also comprise the further step of measuring the operational network device energy consumption information. The operational energy consumption of the network device can be measured by the network apparatus itself using an internal energy consumption measurement device or by an external energy consumption measurement device. The measured operational network device energy consumption information can be stored in the storage device of the network apparatus. This step allows the measured operational network device energy consumption information be used later for deriving the network device energy profile information or for managing energy consumption of the network device.

Similarly, the method can comprise the further step of measuring the operational network device load bandwidth information. The operational load bandwidth information of the network device can be measured by the network apparatus itself using an internal load bandwidth measurement device or by an external load bandwidth measurement device. The measured operational network device load bandwidth information can be stored in the storage device of the network apparatus. This step allows the measured operational network device load bandwidth information be used later for deriving the network device energy profile information or for managing energy consumption of the network device.

The method can comprise the further step of receiving additional information by the network apparatus from an external information provider. The additional information, such as temperature and/or weather forecast, is intended to provide additional information to manage energy consumption of the network device.

The determination of the network device energy profile information can also use or consider the received additional information. For example, the network device energy profile information can be classified by climatic season information that is provided by the additional information. This is especially important when the additional information can influenced significantly the energy profile information.

The application provides a method of operating the communication network.

The method comprises the steps of determining at least one characteristic status of the communication network. The characteristic status comprises operational energy profile information of the network devices as described above.

After this, network areas that have higher energy consumption are selected for the network operator using the characteristic status of energy consumption. The network operator can then take corrective actions to reduce energy consumption of the selected higher energy consumption network areas.

Advantageous, the application provides an operational energy profile that is accurate. These accurate operational energy profiles can be used to serve or to enable other functions.

Extended network routing algorithm can be implemented using the energy profiles. Network Management System (NMS) can use the energy profiles to provide a more comprehensive monitoring of network equipments. Communication network OPEX (operating expenditure) can be estimated more accurately using the operational electrical energy consumption information that is provided by the energy profiles. When energy profiles information of most if not all network devices of a communication network, total communication network electrical energy consumption may also be better managed. Moreover, different vendors can use various technologies to implement an energy profile generator (EPG) for providing appropriate energy profile for various network nodes.

Various approaches to measure the electrical energy consumption or to gather the electrical energy consumption are possible.
- Externally provided electrical energy consumption information

A manufacturer of network devices can provide detailed information about its electrical power consumption. This information, which has a machine-readable format, can be provided via an interface to MIBs (Management Information Bases) of the network devices.

The information can be provided as an electronic table that resides in a computer memory. This allows for easier reading of the information and for easier constructing of the energy profile along with operational or current load bandwidth information.

Electrical power consumption measurement points of the network devices can be located externally or internally.
- External measurement of electrical power consumption

A third party or a company that produces the network device can provide a means to measure externally the electrical power consumption of the network device using a certain kind of mechanism as well as a means to copy or to provide the measured information to the EPG via an appropriate interface.
- In-built external measurement of electrical power consumption

The EPG can have electrical power consumption measurement devices that are connected to external interfaces, such as an electrical power plug and that are connected in parallel or in series with the measured network devices. Measurement points can be located in front or behind the network devices. The actual electrical power consumption can be computed by multiplying measured electrical current with rated electrical power supply voltage. With this approach, only the whole network devices but not internal device of the network device, such as a line card, can be measured.
- In-built internal measurement of electrical power consumption

In this case, the electrical power consumption of internal device of the network device, such as the line card, can be measured.

The network device can also measure its different internal devices electrical power consumption of and it can transmit the measured electrical power consumption information to the EPG.

Alternatively, the EPG can have measurement devices that have measurement points, which are placed inside a network device, for example, a measurement-point can lie between an electrical power connector of a line card and an electrical power connector of a backplane. The EPG can also be part of a measuring device of a network device, for example, an in-built semiconductor chipset that comprises a voltage measurement device and an EPG.

Via the above-mentioned mechanisms, the EPG knows the current electrical power consumption. The EPG can measure the electrical power consumption in a normal operation mode or in a testing phase. In the testing phase, the used load bandwidth can be measured by the EPG itself or be measured by another device. By varying the used load-bandwidth, different electrical power measurement points are acquired and energy profiles can then be constructed.

Approaches how to measure or gather the current load-bandwidth

Similarly, different possibilities for gathering the load-bandwidth exist.
- External measurement of load bandwidth consumption

A third party or a company that produces network devices can externally measure a load bandwidth consumption of the network devices using a kind of mechanism. The EPG copies or obtains the measured load bandwidth information via an appropriate interface.

Load bandwidth measure points of the network device can be located externally or internally.
- In-built external measurement of current load bandwidth

In this case, the EPG has devices to measure load bandwidth usage. These measurement devices are connected to external interfaces of the network device, such as line card ports. With this approach, the load bandwidth consumption of only whole network devices but not internal devices of the network devices, such as network processors, can be measured.
- Internal measurement of current load-bandwidth

The measurement points can be located internally to the network device, such as an inside part of a network router. With such an approach, the load bandwidth, for example, of a network processor can be measured.

There is the possibility that the network device itself measures its different internal network device load-bandwidth and it transmits this information to the EPG. This functionality can be provided certain modern telecommunication hardware, such as routers and switches. In this case, the EPG reads in this information and can easily construct an appropriate energy profile by aligning this information with the appropriate electrical power consumption information. Another option is that the EPG has measurement devices that have its own measurement points inside the network device, such as directly on the line card. Another option is that the EPG is part of the measured device itself, as in an in-built semiconductor chipset.

### Approaches to calculate the energy profiles

Different ways can be used to represent or to construct the energy profiles. The different ways include a bunch of data points or mathematical functions like polynomials or like splines. The splines comprise intervals and approximate certain functions, which include pieces of simple functions that are provided on certain subintervals. The simple functions are joined at their endpoints with a suitable degree of smoothness.

The operational load bandwidth and operational electrical power consumption can be measured over a certain period. These measured values are put together to form a tuple that comprises a set of elements that includes the load bandwidth values, the electrical power-consumption values, and its associated time points. The EPG then sorts the tuples with respect to a particular element of the tuple, such as the load bandwidth. A function is later selected to represent the sorted tuples. The selected function is then included in the energy profiles.

When the energy profiles comprise more dimensions, such as temperature, process that is similar to the same above process can also be used to develop the multi-dimensional EP.

To construct the energy profile, the EPG can take continuous measurements or it only takes continuous measurements for a fixed duration, as in a testing phase, or periodically for a fixed duration. In the latter case, the EPG may be undergoing a learning phase.

The EPG takes the operational measurement values and the historical measurement values into account. Furthermore, it can perform estimations using interpolation for time regions in which there are no measurement values. It can also provide future measurement prediction.

Instead of measuring the consumed electrical power and the used load bandwidth of network devices, it is also possible that energy information of the network devices, which are provided by its manufacturers, is used to derive the energy profiles. The construction of energy profiles can also include other information such as weather forecasts or location information. In the case of inclusion of the weather forecast, the EPG can additionally measure temperature outside a building of the network device. This measurement is used to match the forecasted temperatures with the measured temperature. These measurements can be used to derive multi-dimensional energy profiles.

In short, the energy profiles may be built using a set number of variables, such as load bandwidth, electrical power consumption, temperature, and weather. The energy profiles can be expressed using an n-dimensional array or it can be expressed as a function. To find points on the n-dimensional structure that are not included on the energy profiles, interpolation or extrapolation techniques can be used.

The energy profiles provided by the EPG may not only help the implementation of energy-aware traffic engineering, but can provide network administrators with the energy consumption characteristic of network and of call centres in order to make decisions for network planning and for network operational processes.

Storage facility to store measurement information and energy profiles

The measured information and the energy profiles can be stored in the EPG. In addition, MIBs (Management Information Bases) and APIs (application programming interfaces) can be developed or extended such that other devices can access the measured information and the energy profiles using protocols, such as SNMP (Simple Network Management Protocol) protocol.

### External communication interface and supporting protocols

An interface is provided for the EPG to propagate the energy profiles that are generated by the EPG and/or for acquiring information to produce the energy profiles. The interface comprises an appropriate interface, such as a display interface, a printer interface, an Ethernet interface or a Wi-Fi interface. The EPG can provide its information to other entities using a SNMP protocol or other protocols. The NMS can poll the EPG for the generated energy profiles and for acquiring these generated energy profiles. Alternatively, the EPG can participate in a distributed IGP (Interior Gateway Protocol) protocol, like OSPF-TE (Open Shortest Path First - Traffic Engineering), and then distribute the energy profiles to other network devices or to other network sites. The energy profiles can also be collected manually.

### Applicability to other Segments

The thoughts of the application can be applied to other areas, beside telecommunication area, such as electrical appliances that includes television and refrigerator. Electrical appliance energy profiles can be used to understand electrical power consumption characteristics with respect to time or external influences, such as weather or surrounding temperature.
- Fig. 1: illustrates a network site and additional entities to calculate an energy profile,
- Fig. 2: illustrates a graph of measured electrical power consumption of the local communication network of Fig. 1 and a graph of used signal load bandwidth of the local communication network of Fig. 1, and
- Fig. 3: illustrates an energy profile of the local communication network of Fig. 1.

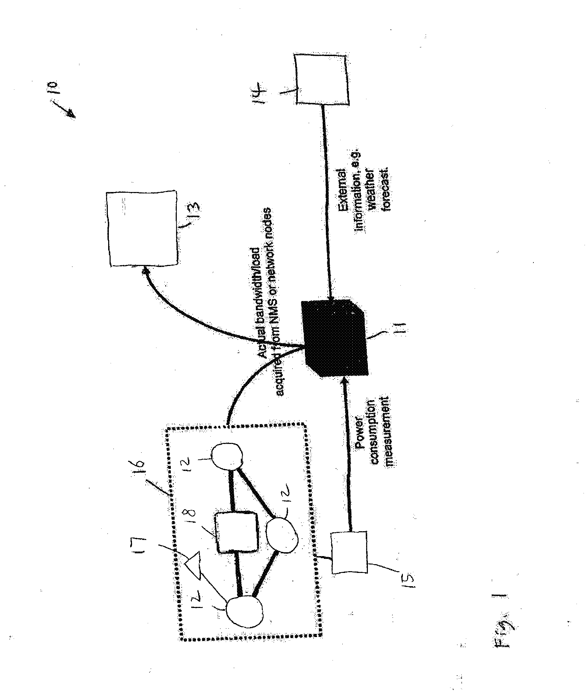

Fig. 1 shows a network site 10 that includes an energy profile generator (EPG) 11. The network site 10 is part of a telecommunication network, which is not shown in Fig. 1.

The EPG 11 is connected to a network site 16 of the network site 10 and to a network management system (NMS) 13 via an Ethernet interface whilst the NMS 13 is connected to the network site 16. The connection of the NMS 13 to the network nodes 12 is not shown in Fig. 1. The EPG 11 is also connected to an external information provider 14 and to measurement equipments 15 that are connected to the network nodes 12.

The network site 16 has several network nodes 12 that are connected to each other. A supporting equipment 17 for filtering electrical power noise is connected to one network node 12. One network node 12 is connected to another network node 12 by a router 18.

The NMS 13 manages the network nodes 12 and it provides operational or used load bandwidth information of the network nodes 12 to the EPS 11. The load bandwidth is also called a load. The operational load bandwidth information can be expressed in terms of data bits per second. The operational load bandwidth information describes an amount of data that is passing through the network nodes 12 within a particular period.

The network nodes 12 exchange voice signals and data signals with other network nodes.

Extended MIBs (Management Information Bases) of the network nodes 12 act as a memory device for the EPG 11. The extended network nodes MIBs store its operational load-bandwidth information and its operational electrical power consumption information. For example, an IP (Internet Protocol) Router MIB stores its operational load bandwidth information. The extended network-node MIBs also stores its electrical power management settings and its power management capability information.

The EPG 11 uses SNMP (Simple Network Management Protocol) protocol, a simple communication protocol, for communicating with the NMS 13 and with the extended MIBs. The Ethernet interface conducts or handles the communication of the EPG 11 with external devices. The EPG 11 polls the extended network node MIBs to gather the currently used load bandwidth information and the current electrical power consumption information. The EPG 11 also receives external information, such as weather forecast, from the external information provider 14.

The gathered load bandwidth information, the gathered electrical power consumption information, and the received external information are used by the EPG 11 to generate energy profiles (EPs) of the network nodes 12. These generated EPs are stored in the extended network node MIBs.

The measurement equipments 15 include several multi-meters to measure the electrical power consumption of the network nodes 12. The multi-meters are not shown in Fig. 1. The measured electrical power consumption information is stored in the extended network node MIBs.

In application, transport equipments can comprise the measurement equipment 15, and the MIB extensions. An appropriate EPG algorithm guides or manages the transport equipments. The transport equipments can include IP routers, MPLS (Multi Protocol Label Switching) routers, Carrier Ethernet devices, and WDM (wavelength-division multiplexing) equipments.

A stand-alone product or a semiconductor chipset can provide above-mentioned features of the MIB extensions, the measurement equipments 15, and computer processor instructions for implementing the EPG algorithm.

The concept and the use of the EPG 11 have certain advantages in its implementation.

It does not require network equipment manufacturers to provide network equipments with comprehensive or detailed electrical power profile information. It is believed that current network equipments do not provide detailed information about its operational load bandwidth or about its operational electrical power consumption. The network equipment manufacturers usually state only maximum electrical power consumption or idle and standby electrical power consumption of their network equipments. This information does not provide for a construction of accurate operational energy profiles. This is especially so for a single network site where additionally supporting equipments like air conditioning and electrical power supply are not taken into account.

To support the EPG 11, the network equipment manufacturers does not need to deploy MIBs for maintaining electrical power consumption information of their network equipments or to implement these MIBs in the same manner.

The network device manufacturer is also not required to include its network device setting with respect to other network devices. Thus, as an example, the deployment of the EPG 11 does not need cooling system-power consumption information of a network-equipment with respect to a particular network node or to a particular temperature-control measurement device

Legacy equipment that usually does not have energy consumption information can work with the EGP 11. In contrast, additional infrastructure features, like uninterrupted power supply (UPS) and environmental cooling, can be included on the calculation of the EP 24. A simple method can be used to consider these features. Use of a standardized multi-vendor and multi-technology layer approach can be used to implement the EPG 11.

A method of operating the network site 10 is shown below.

The method comprises the step of measuring the operational network node electrical power consumption by the measurement equipment multi-meters. The measured operational network node electrical power consumption information are then stored in the extended network node MIBs.

The network nodes 12 also store its operational or currently used network-node load bandwidth information in the extended network node MIBs.

After this, the EPG 11 gathers or polls the extended network node MIBs for the currently used network-node load bandwidth information and for the network-node electrical power consumption information.

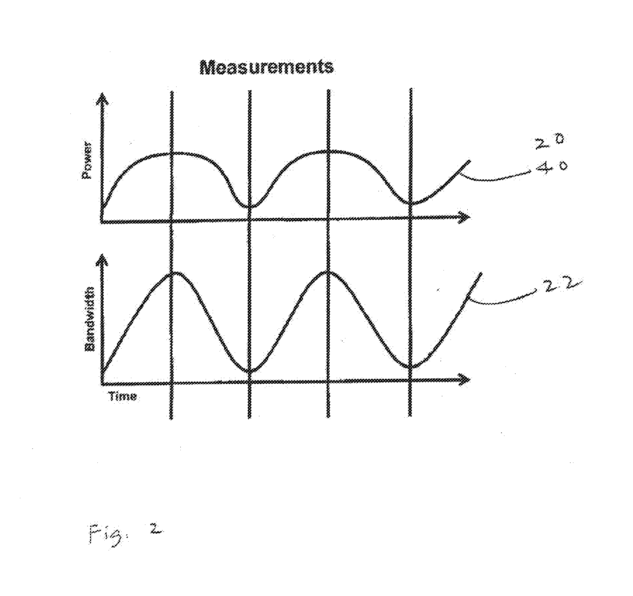

A graph 20 of the gathered network-node electrical power consumption with respect to time and a graph 22 of the currently used network-node load bandwidth with respect to time are shown in Fig. 2.

After this, a processor of the EPG 11 generates or produces the network node EP 24 using the gathered network node load-bandwidth information and the gathered network-node electrical power consumption information. The processor is a form of a calculating device.

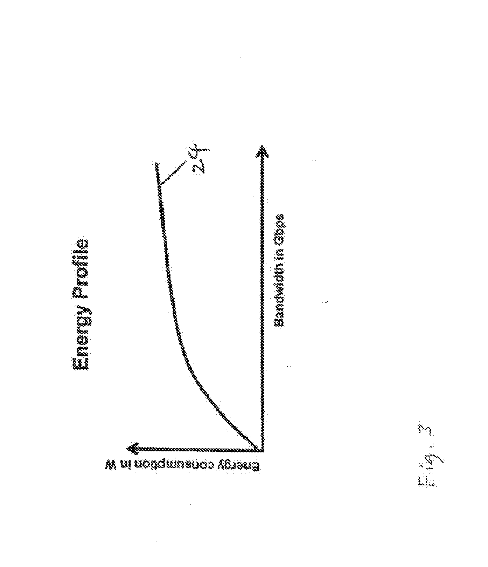

The generated network node EP 24 is depicted in Fig. 3. The EPG 11 afterward stores the generated network node EP 24 in the extended network node MIBs for later use by other devices to manage and to reduce energy consumption of the network site 10.

Although the network node EP 24 shows a function of the network-node electrical power consumption with respect to the used network-node load bandwidth, other forms of network node EP are possible.

In a further embodiment, the method includes a further step of receiving external conditions using sensors or receiving weather forecast information by the EPG 11 from the external information provider 14. The network node EP 24 is then generated using the gathered network node load-bandwidth information, the gathered network-node electrical power consumption information, as well as the received external conditions information or weather forecast information. The generation of the network node EP 24 also include air conditioning electrical power information of the network nodes 12.

When the weather forecast shows that environmental temperatures would increase, the network node EP 24 is constructed with an assumption of higher electrical power consumption, since more electrical power is needed for cooling in a hotter environment. The construction uses earlier similar environmental temperatures and corresponding appropriate energy profiles or appropriate electrical power consumption information.

In another embodiment, the network node EP 24 is derived by matching the forecasted environmental temperatures values with similar earlier environmental temperature values. The earlier electrical power consumption values that correspond with the matched earlier environmental temperature values are selected for deriving the network node EP.

The frequency of EP generation can also be used to select a forecast duration of the weather forecast. For example, when the EP is generated once every 24 hours, the generation of the EP 24 can use weather forecast data that covers the next 24 hours or more.

This method provides accurate EPs, which can be used to identify potential energy reduction areas for reducing operating expenditure (OPEX).

Network node energy OPEX can be estimated more accurately and can be reduced, since more precise energy consumption monitoring of the network nodes is provided. It is also believed that electrical power consumption of a whole communication network can be better managed, if the whole communication network uses this method. Constructions of the EPs described in this method can be accurately provided even if different vendors produce the network nodes and the EPG.

### List of abbreviations

- API: application programming interface
- EP: Energy Profile
- EPG: Energy Profile Generator
- IGP: Interior Gateway Protocol
- IGP: Interior Gateway Protocol
- IP: Internet Protocol
- MIB: Management Information Base
- MPLS: Multi Protocol Label Switching
- NMS: Network Management System
- OPEX: operating expenditure
- OSPF-TE: Open Shortest Path First - Traffic Engineering
- SNMP: Simple Network Management Protocol
- UPS: Uninterruptible Power Supply
- UPS: uninterrupted power supply
- WDM: wavelength-division multiplexing

### Reference numbers

- 10: network site
- 11: energy profile generator (EPG)
- 12: network nodes
- 13: network management system (NMS)
- 14: external information provider
- 15: measurement equipments
- 16: network site
- 17: supporting equipment
- 18: router
- 20: power consumption graph
- 22: load bandwidth graph
- 24: energy profile

## Claims

1. A network apparatus (11) that comprises
a communication interface for receiving operational network device energy consumption information (20) and operational network device load bandwidth information (22),
a calculating device for deriving an energy profile information (24) using the operational network device energy consumption information (20) and the operational network device load bandwidth information (22), and
a storage device for storing the derived energy profile information (24).

2. A network apparatus (11) of claim 1
**characterised in that**
the network apparatus (11) further comprises
an energy consumption measurement device for measuring the operational network device energy consumption.

3. A network apparatus (11) of claim 1 or 2
**characterised in that**
the network apparatus (11) further comprises
a load bandwidth measurement device for measuring the operational network device load bandwidth information.

4. A network apparatus (11) that comprises
an energy consumption measurement device for measuring the operational network device energy consumption,
a load bandwidth measurement device for measuring the operational network device load bandwidth information,
a calculating device for deriving an energy profile information (24) using the operational network device energy consumption information (20) and the operational network device load bandwidth information (22), and
a storage device for storing the derived energy profile information (24).

5. A communication network that comprises a network apparatus (11) of one of claims 1 to 4.

6. A measurement device that comprises a network apparatus (11) of one of claims 1 to 4.

7. A method for determining a characteristic status of a communication network (10), the method comprising the steps of
determining operational network device energy consumption information,
determining operational network device load bandwidth information, and
determining network device energy profile information using the determined operational network device energy consumption information and the determined operational network device load bandwidth information.

8. A method of claim 7,
**characterised in that**
the method comprises the further step of
storing the determined operational network device energy profile information.

9. A method of claim 7 or 8,
**characterised in that**
the method comprises the further step of
measuring the operational network device energy consumption information.

10. A method of claim 9,
**characterised in that**
the method comprises the further step of
storing the measured operational network device energy consumption information.

11. A method of one of the claims 7 to 10,
**characterised in that**
the method comprises the further step of
measuring the operational network device load bandwidth information.

12. A method of claim 11,
**characterised in that**
the method comprises the further step of
storing the measured operational network device load bandwidth information.

13. A method of one of the claims 7 to 12,
**characterised in that**
the method comprises the further step of
receiving additional information.

14. A method of claim 13,
**characterised in that**
the determination of the network device energy profile information (24) further uses the received additional information.

15. A method of operating a communication network (10), the
method comprising the steps of
determining at least one characteristic status of the communication network according to one of the claim 7 to 14, and
selecting network areas of the communication network using the characteristic status.
